# EUROPÄISCHE PATENTSCHRIFT

(11) **EP 1 529 386 B1**
(45) Veröffentlichungstag und Bekanntmachung des Hinweises auf die Patenterteilung: **03.05.2006**
(21) Anmeldenummer: 03792135.0
(22) Anmeldetag: 11.08.2003
(51) Int. Cl.: H04L 12/56, H04Q 11/04

(54) **VERFAHREN ZUM AUFBAU EINES ERSATZPFADES IN EINEM NETZWERK**
METHOD FOR ESTABLISHING A SUBSTITUTE PATH IN A NETWORK
PROCEDE D'ETABLISSEMENT D'UNE VOIE DE SUBSTITUTION DANS UN RESEAU

(30) Priorität: 16.08.2002 DE 10237584
(43) Veröffentlichungstag der Anmeldung: 11.05.2005
(73) Patentinhaber: SIEMENS AKTIENGESELLSCHAFT, 80333 München (DE)
(72) Erfinder: PAULUHN, Uwe, 81477 München (DE); STILLING, Bernd, 81379 München (DE)
(86) Internationale Anmeldenummer: PCT/DE2003/002697
(87) Internationale Veröffentlichungsnummer: WO 2004/019563

(56) Entgegenhaltungen:
- WO-A-01/29682
- AHN G ET AL: "Simulator for MPLS path restoration and performance evaluation" JOINT IEEE INTERNATIOANL CONFERENCE ON ATM AND HIGH SPEED INTELLIGENT INTERNET SYMPOSIUM. ICATM, XX, XX, 22. April 2001 (2001-04-22), Seiten 32-36, XP002252485
- BAWORNTUMMARAT C ET AL: "On the comparison of optical WDM mesh network protection strategies" IEEE 2000, Bd. 2, 22. Oktober 2000 (2000-10-22), Seiten 886-891, XP010532032
- V. SHARMA, F. HELLSTRAND: "Framework for MPLS based recovery" RFC DRAFT, [Online] Juli 2002 (2002-07), Seiten 1-31, XP002265705 Gefunden im Internet: <URL:http://www.watersprings.org/pub/id/dr aft-ietf-mpls-recovery-frmwrk-06.txt> [gefunden am 2003-12-19] in der Anmeldung erwähnt
- F. HELLSTRAND, L. ANDERSSON: "Extensions to CR-LDP and RSVP-TE for setup of preestablished recovery tunnels" RFC DRAFT, [Online] Juli 2000 (2000-07), Seiten 1-6, XP002265706 Gefunden im Internet: <URL:http://www.watersprings.org/pub/id/dr aft-hellstrand-mpls-recovery-merge-00.txt> [gefunden am 2003-12-19]
- EDWARD CHOW C ET AL: "A fast distributed network restoration algorithm" PROCEEDINGS OF THE INTERNATIONAL PHOENIX CONFERENCE ON COMPUTERS AND COMMUNICATIONS. TEMPE, MAR. 23 - 26, 1993, NEW YORK, IEEE, US, Bd. CONF. 12, 23. März 1993 (1993-03-23), Seiten 261-267, XP010110033 ISBN: 0-7803-0922-7

## Beschreibung

Die Erfindung betrifft ein Verfahren zur Verwaltung von Ressourcen beim Aufbau eines Ersatzpfades in einem Netzwerk nach dem Oberbegriff des Patentanspruches 1.

Aus der deutschen Offenlegungsschrift DE 101 05 675 A1 ist ein Verfahren zum Verbindungsaufbau in einem optischen WDM-Übertragungssystem mit mehreren schaltbaren optischen Netzknoten bekannt, von denen zumindest einer einen Wellenlängenkonverter aufweist, bei dem zum Aufbau einer Verbindung von einem ersten optischen Netzknoten über zumindest einen Verbindungspfadabschnitt zu einem N-ten optischen Netzknoten ein erster Verbindungsvektor zur Kennzeichnung von auf dem folgenden Verbindungspfadabschnitt verfügbaren WDM-Übertragungskanälen gebildet wird und über das zumindest eine optische WDM-Übertragungssystem übertragen wird. Dadurch ist eine Methode zur Erstellung eines Pfades für eine transparente Übertragung von Signalen aus einem Quellknoten über schaltbare Netzknoten bis zu einem Endknoten beschrieben.

In der Veröffentlichung von G. Ahn et al., "Simulator for MPLS path restoration and performance evaluation", Proceedings of "Joint 4th IEEE International conference on ATM and high speed intelligent internet symposium", 22 April 2001, Seite 32-36 sind Verfahren zum Aufbau eines Ersatzpfades bei MPLS (= Multiprotocoll label switching) -Netzwerken beschrieben. Insbesondere wird in Abschnitt 2 ein "Simple-Dynamic scheme"-Verfahren vorgestellt, das einen möglichst kurzen Ersatzpfad zur Umleitung um die Störstelle in einem Netzwerk bereitstellt. Wenn in einem Netzknoten ein Fehler detektiert wird, wird mittels des "Simple-Dynamic scheme"-Verfahrens ein neuer Ersatzpfad zu einem PML (= protection merging label switching router) über den kürzesten Übertragungsweg geschaltet, wobei kein Betriebspfad genutzt wird.

Aus der Druckschrift C. Baworntummaratarat et al. "On the comparison of optical WDM mesh network protection strategies", Conference Proceedings Milcom 2000, 21st Century military communications conference, 22-25. Oktober 2000, Vol. 2 Seiten 886-891 ist ebenfalls ein Verfahren zum Aufbau eines Ersatzpfades in WDM-Netzwerken bekannt. Es wird zwischen der Wiederherstellung einer Verbindung ("link restauration") und eines Pfades ("path restauration") unterschieden. Im Falle des "link restauration"-Verfahrens wird der unterbrochene Datenverkehr um die Störstelle umgeleitet, während im Falle des "path restauration"-Verfahrens der unterbrochene Datenverkehr auf einem vollkommen neuen Pfad von einem Quell- zu einem Zielknoten geleitet wird. Obwohl das "link restauration"-Verfahren schnell ist, weil es den Vorteil hat, lokal und transparent eine Störung zu beseitigen, ist es für Netzwerke mit vielen Wellenlängen nicht geeignet, da die Verfügbarkeit von freien Wellenlängenkanälen noch eingeschränkt ist. Für das "path restauration"-Verfahren werden drei Möglichkeiten in der Veröffentlichung vorgestellt. Es handelt sich dabei um das "Minimal-cost"-Verfahren, das "Disjoint-path"-Verfahren und das "Single-link-basis"-Verfahren. Bei allen Verfahren handelt es sich um so genannte vorgeplante ("pre-planned" oder "pre-negotiated") Restoration/Protection Verfahren, bei denen die Route des Ersatzpfades bereits vor Eintritt eines Fehlers ermittelt und abgespeichert wird.

In einem automatisch schaltbaren Transportnetzwerk (ASTN = Automatic Switched Transport Network) wie beispielweise bei einem optischen transparenten Netzwerk wird bei einer Störstelle der Übertragung z. B. durch den Ausfall einer Verbindung in einem geschalteten Pfad mit einer ersten Ressource des Netzwerks zwischen zwei Endknoten ein Ersatzpfad mit Umleitung der Störstelle aufgebaut. Dafür wird eine weitere Ressource des Netzwerks für den Aufbau und für die Schaltung des Ersatzpfades benötigt. Die Umschaltung zwischen einem Pfad und einem Ersatzpfad erfolgt mittels neuer Schaltungen an den Endknoten und gemäß den zwei Ressourcen für die weiteren Schaltungen der zwischengeschalteten Netzknoten.

Zur Einrichtung der Umleitung stehen prinzipiell zwei Restaurationsmethode zur Verfügung durch lokale oder globale Einstellung des Ersatzpfades (Local Repair, Global Repair). Eine Einführung dieser beiden Methoden wird in einer Internet-Druckschrift "Framework for MPLS-based Recovery <http://search.ietf.org/internet-drafts/draft-ietf-mpls-recovery-frmwrk-03.txt>", Vishal Sharma et al., Juli 2001 beschrieben.

Bei lokaler Einstellung wird eine möglichst enge Umgehung einer Fehlerstelle aufgebaut. Der Aufbau dieser Umgehung wird von dem Netzknoten eingeleitet, der direkt dem fehlerhaften Verbindungsabschnitt vorgeschaltet ist. Der Aufbau erfolgt relativ schnell, die Ressourcen zur Neuschaltungen bleiben jedoch in Hinsicht auf Auslastung nicht optimal, da alle Schaltungen im ursprünglichen Pfad abgebaut werden und weiterhin mittels einer neuen Ressource neue Schaltungen für den Ersatzpfad erstellt werden. Bei globaler Einstellung wird der Ersatzpfad als komplett vom Quellknoten X bis zum Endknoten Y neu berechnet und durch neue Schaltungen an den zwischengeschalteten ursprünglichen noch verwendeten Netzknoten sowie an den neu eingeführten Netzknoten aufgebaut. Diese zweite Methode ermöglicht eine bessere Auslastung der Ressourcen des Netzwerks für den Ersatzpfad, hat jedoch den Nachteil langsam zu sein.

Aufgabe der Erfindung ist es, ein Verfahren zum Aufbau eines Ersatzpfades in einem Netzwerk anzugeben, das eine optimale Nutzung der Ressourcen des Netzwerks ermöglicht.

Eine Lösung der Aufgabe erfolgt hinsichtlich ihres Verfahrensaspekts durch ein Verfahren mit den Merkmalen des Patentanspruchs 1.

Erfindungsgemäß wird zur Einstellung der neuen Ressource für die Schaltung von Verbindungsabschnitten eines Ersatzpfades lediglich die geänderten und notwendigen Neuschaltungen der neu benötigten und dem bisherigen Pfad verwendeten Verbindungsabschnitten. Dies hat den Vorteil, dass die Verwaltung der Ressourcen für alle Pfade des Netzwerk insgesamt erheblich erleichtert wird, weil Ressourcen zur entsprechenden Neuschaltungen einer transparenten Verbindung zwischen zwei Orten des Netzwerks aus neuen erstellten Pfaden nicht komplett neu, aber aus schon erstellten Ressourcen der existierenden Pfaden erzeugt werden.

Bei einer Umleitung von Signalen z. B. aufgrund einer Unterbrechung eines Verbindungsabschnittes oder eines defekten Netzknoten oder bei einer Feststellung einer vollbesetzten Übertragungskapazität im einem Pfad erfolgt das erfindungsgemäße Verfahren abschnittsweise automatisch.

Insbesondere auch bei der Schaltung neuer Verbindungsabschnitte zur Umleitung der Signale müssen bei den Netzknoten, bei den die Signale vom ursprünglichen Pfad aus- und eingekoppelt werden, eine der neuen Verbindungsumleitung angepassten Schaltung durchgeführt werden. Es kann ebenfalls bei den neuen Verbindungsabschnitten und Netzknoten in der Umleitung eine minimale Anzahl von Neuschaltungen durchgeführt werden, wenn die ursprüngliche Konfiguration der Schaltungseinstellungen in der Umleitung bekannt ist.

Die Erfindung begrenzt sich nicht auf eine Granularität (Raumschaltung, Gruppen- oder Einzelwellenlängenschaltung, Polarisationschaltung, etc) der Kanäle im Netzwerk, bei denen die Signale übertragen werden. Unterschiedliche Multiplex-Technik zur Übertragung der Signale können verwendet werden. Die Verbindungsabschnitte können aus einer Mehrzahl von Wellenleitern wie optische Fasern bestehen.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigt:

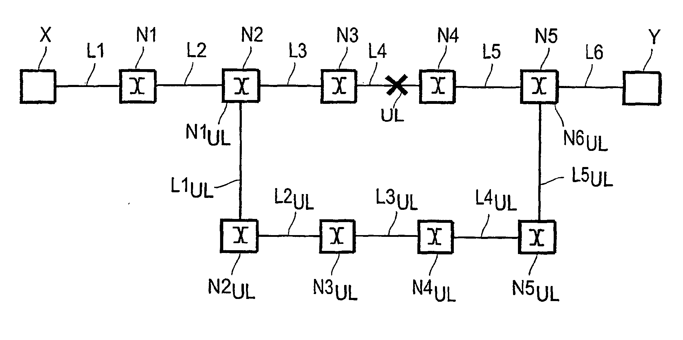

- Fig. 1:: eine schematische Darstellung von einem Netzwerk mit einer Unterbrechung bei einem Verbindungsabschnitt.

In Fig. 1 ist schematisch ein Netzwerk z. B. als optischer transparenter Netzwerk mit einer Unterbrechung als Störstelle UL bei einem Verbindungsabschnitt L4 dargestellt. Aus Ersichtlichkeitsgründen sind nur Verbindungsabschnitte L1, L2, L3 L4, L5, L6 und zwischengeschaltete Netzknoten N1, N2, N3, N4, N5 für einen Pfad zur Signalübertragung aus einem Quellknoten X bis zum Endknoten Y dargestellt, bei dem die Unterbrechung an dem Verbindungsabschnitt L4 vorkommt. Am Netzknoten N3 wird die Unterbrechung bei dem Verbindungsabschnitt UL festegestellt und eine Fehlermeldung mit Pfad- und Verbindungsabschnittidentität (path- and link-ID) über die Netzknoten N2, N1 bis zum Quellknoten X übertragen. Dies ist ermöglicht, weil die Verbindung zwischen dem Quellknoten X und dem Netzknoten N3 noch funktionsfähig ist.

Im Fall eines Defektes bei dem Netzknoten N3 selber anstelle des Verbindungsabschnittes L4 übernimmt der Netzknoten N2 die Vermittlung der Fehlermeldung an den Quellknoten X. Die Vermittlung der Fehlermeldung an den Quellknoten X erfolgt immer aus dem der Störstelle UL vorgeschalteten intakten Netzknoten.

Mehrere Störstellen können ebenfalls detektiert werden, wobei bei z. B. zwei Störstellen zuerst die erste nach dem erfindungsgemäßen Verfahren gemäß einer zweiten von der ersten Ressource und weiterhin die dritte von der zweiten Ressource aktualisierten wird. In anderen Worten wird die Ressource des Pfades mit den Ressourcen der sukzessiven Ersatzpfade aufwärts derart verglichen, dass die Ressourcen nacheinander erfindungsgemäß aktualisiert werden, solange dass eine Fehlermeldung dem Quellknoten X zugeführt wird. Die vom Quellknoten X nächstliegende Störstelle wird zuerst und die weiteren Störstellen werden weiterhin aufwärts bis zu der vom Endknoten Y nächstliegenden Störstelle mit den Ersatzpfaden umgeleitet. Schaltungen von identisch verwendeten Verbindungsabschnitten zwischen dem ursprünglichen Pfad und allen Ersatzpfaden werden beibehaltet, d. h. nicht neu geschaltet.

Für die Schaltung der Verbindungsabschnitte bei den Netzknoten des ursprünglichen Pfades wurde eine erste Ressource des Netzwerks zur Übertragung verwendet.

Bei Erhalt der Fehlermeldung am Quellknoten X ein Ersatzpfad zur Umleitung des unterbrochenen Verbindungsabschnittes L4 zwischen den Quell- und Endknoten X, Y gemäß einer zweiten noch zu erstellenden Ressource gewählt wird. Die Wahl des Ersatzpfades kann gemäß unterschiedlichen aus dem Stand der Technik bekannten Methoden erfolgen. Als Beispiel wie in einem vorigen Abschnitt der Beschreibung beruhen zwei Methoden auf lokale oder globale Einstellung eines Ersatzpfades (aus dem englisch "Local Repair" oder "Global Repair"). Bei dem erfindungsgemäßen Verfahren wird als Restaurationsmethode eine globale Einstellung eines Ersatzpfades verwendet, jedoch wird der ursprüngliche Pfad noch nicht bei der Restauration abgebaut.

Der optimale Weg vom Quellknoten X bis zum Endquoten Y wird per Routenprotokoll (Routingprotocoll) ermittelt, wobei die Ressource des bisherigen Pfades zusätzlich mitgenutzt wird. Zur Einstellung einer zweiten Ressource des Netzwerks für die Schaltung der Verbindungsabschnitten des Ersatzpfades werden mittels eines aus dem Quellknoten X abgegebenen Steuersignals lediglich die in der Umleitung angeordneten Verbindungsabschnitten L1_{UL}, L2_{UL}, ..., L5_{UL} mit zugeordneten Netzknoten N1_{UL}, N2_{UL}, ... , N6_{UL} neu geschaltet. Hier sind die Netzknoten N1_{UL} und N6_{UL} im Ersatzpfad die Netzknoten N2, N5 des bisherigen Pfades.

Der Quellknoten X initiiert den Aufbau des Ersatzpfades, in dem in jedem einzelnen Netzknoten dieses Pfades geprüft wird, ob die neue Schaltverbindung mit der Schaltverbindung des ursprünglichen Pfades identisch ist. Zwei Fälle kommen vor:
1. Fall 1 (identisch): Es muss nicht (physikalisch) neu geschaltet werden, die Ressource des alten Pfades ist lediglich dem Ersatzpfad zuzuordnen (Path-ID des alten Pfades wird durch die neue Path-ID ersetzen). Hier werden die Schaltungen bei den Komponenten X, L1, N1, L2 und L6, Y beibehaltet werden.
2. Fall 2 (nicht identisch): Die im betrachteten Netzknoten für den alten Pfad reservierte Ressource - L3, N3, L4, N4, L5 - werden freigegeben und die neue Verbindung - N2 = N1_{UL}, L1_{UL}, N2_{UL}, ... , L5_{UL}, N5 = N6_{UL} - wird geschaltet.

Anschließend sind die Ressourcen in den Netzknoten entlang des nicht mehr benötigten Teiles des alten Pfades freizugeben.

## Patentansprüche

1. Verfahren zur Verwaltung von Ressourcen beim Aufbau eines Ersatzpfades in einem transparent schaltbaren Netzwerk zur Signalübertragung aus einem Quellknoten (X) zu einem Endknoten (Y), die mit einer Mehrzahl von Netzknoten (Ni) mit zwischengeschalteten Verbindungsabschnitten (Li) (i = 1, 2, ...) verbunden sind,
bei dem mittels Schaltvorrichtungen an den Netzknoten (Ni) und an den Quell- und Endknoten (X, Y) mehrere Pfade zur Signalübertragung zwischen den Quell- und Endknoten (X, Y) schaltbar sind,
bei dem für die Schaltung der Verbindungsabschnitte (Li) innerhalb eines Pfads eine aus dem Quellknoten (X) gesteuerte erste Ressource des Netzwerks zur Signalübertragung verwendet wird, bei dem die Signalübertragung bei Auftreten mindestens einer Störstelle (UL) in diesem Pfad unterbrochen und eine Fehlermeldung aus einem der Störstelle (UL) vorgeschalteten Netzknoten bis zum Quellknoten (X) übertragen wird,
und bei dem bei Erhalt der Fehlermeldung am Quellknoten (X) ein Ersatzpfad zur Umleitung der Signale um die Störstelle (UL) zwischen den Quell- und Endknoten (X, Y) mittels eines aus dem Quellknoten (X) abgegebenen Steuersignals ausgewählt wird,
**dadurch gekennzeichnet,**
**dass** mittels des aus dem Quellknoten (X) abgegebenen Steuersignals unter Mitbenutzung der ersten Ressource eine zweite Ressource für die Schaltung der Verbindungsabschnitte des Ersatzpfades in der Weise erstellt wird, dass lediglich die in der Umleitung angeordneten neuschaltungsbedürftigen Verbindungsabschnitte (L1_{UL}, L2_{UL}, ...) mittels der der Umleitung zugeordneten Netzknoten (N1_{UL}, N2_{UL}, ...) neu geschaltet werden und
**dass** die Schaltung der den beiden Pfaden gemeinsamen Verbindungsabschnitte beibehalten wird.

2. Verfahren nach Anspruch 1,
**dadurch gekennzeichnet,**
**dass** der Quellknoten (X) den Aufbau des Ersatzpfades iniitiert, indem in jedem einzelnen Netzknoten des Ersatzpfades geprüft wird, ob die neue Schaltverbindung mit der Schaltverbindung des ursprünglichen Pfades identisch sind, so dass die nicht mehr benötigten Ressourcen in den Netzknoten entlang des Ersatzpfades freigegeben werden.

3. Verfahren nach einem der Ansprüche 1 bis 2,
**dadurch gekennzeichnet,**
**dass** die in der Umleitung angeordneten Verbindungsabschnitte (L1_{UL}, L2_{UL}, ...) mit einer minimalen Anzahl von Neuschaltungen mittels der Netzknoten (N1_{UL}, N2_{UL}, ...) geschaltet werden.

4. Verfahren nach einem der vorhergehenden Ansprüche,
**dadurch gekennzeichnet,**
**dass** bei mehreren detektierten Störstellen in dem Pfad zuerst die dem Quellknoten (X) nächstliegende Störstelle mit einem ersten Ersatzpfad und weiterhin die anderen Störstellen nacheinander aufwärts mit weiteren Ersatzpfaden umgeleitet werden,
**dass** die Ressourcen des ursprünglichen Pfades mit den Ressourcen der sukzessiven Ersatzpfade verglichen und nacheinander aktualisiert werden, und
**dass** Schaltungen von identisch verwendeten Verbindungsabschnitten zwischen dem ursprünglichen Pfad und den jeweiligen Ersatzpfaden beibehalten werden.

5. Verfahren nach einem der vorhergehenden Ansprüche,
**dadurch gekennzeichnet,**
**dass** bei jedem Netzknoten die Schaltung zwischen Kanälen zur Übertragung der Signale mit unterschiedlichen Granularitäten erfolgt.

6. Verfahren nach Anspruch 5,
**dadurch gekennzeichnet,**
**dass** zur Übertragung der Signale wenigstens eine Multiplex-Technik verwendet wird.

## Claims

1. Method for managing resources when establishing a substitute path in a transparent switched network for signal transmission from a source node (X) to a terminal node (Y) which are connected to a plurality of network nodes (Ni) with interposed link sections (Li) (i = 1, 2, ...),
wherein by means of switching devices in the network nodes (Ni) and in the source nodes and terminal nodes (X, Y) a plurality of paths for signal transmission between the source nodes and terminal nodes (X, Y) are switchable,
wherein for the switching of link sections (Li) within a path a first network resource controlled from the source node (X) is used for the signal transmission, wherein the signal transmission is interrupted upon the occurrence of at one fault location (UL) in this path and an error message is transmitted from a network node switched upstream of the fault location (UL) to the source node (X),
and wherein upon receipt of the error message at the source node (X) a substitute path is chosen for rerouting the signals around the fault location (UL) between the source and terminal nodes (X, Y) by means of a control signal emitted from the source node (X)
**characterised in that**
by means of the control signal emitted from the source node (X) using the first resource a second resource for the switching of the link sections of the substitute path is established in such a way that only the link sections (L1_{UL}, L2_{UL}, ...) which are disposed in the rerouting and are in need of reswitching are newly switched by means of the network nodes (N1_{UL}, N2_{UL}, ...) assigned to the rerouting and
**in that** the switching of the link sections common to the two paths is retained.

2. Method according to claim 1,
**characterised in that**
the source node (X) initiates the establishment of the substitute path by checking, in each individual network node of the substitute path, whether the new switched link is identical with the switched link of the original path, thereby releasing the resources no longer needed in the network nodes along the substitute path.

3. Method according to any one of claims 1 to 2,
**characterised in that**
the link sections (L1_{UL}, L2_{UL}, ...) disposed in the rerouting are switched with a minimum number of new switchings by means of the network nodes (N1_{UL}, N2_{UL}, ...).

4. Method according to any one of the preceding claims,
**characterised in that**
where there is a plurality of fault locations in the path, firstly the fault location nearest to the source node (X) is rerouted around with a first substitute path and thereafter the other fault locations in succession upstream are rerouted around with further substitute paths,
the resources of the original paths are compared to the resources of the successive substitute path and are updated in succession, and
switchings of identically used link sections between the original path and the respective substitute paths are retained.

5. Method according to any one of the preceding claims,
**characterised in that**
at each network node switching between channels is carried out for the transmission of signals with differing granularities.

6. Method according to claim 5,
**characterised in that** at least one multiplexing technique is used for the transmission of signals.

## Revendications

1. Procédé pour la gestion de ressources lors de l'établissement d'une voie de substitution dans un réseau commutable transparent pour la transmission de signaux d'un noeud source (X) vers un noeud d'extrémité (Y), lesquels noeuds sont reliés à une pluralité de noeuds de réseau (Ni) avec des segments de liaison (Li) (i = 1, 2, ...) intercalés,
dans lequel plusieurs voies pour la transmission de signaux entre les noeuds source et d'extrémité (X, Y) peuvent être commutées au moyen de dispositifs de commutation au niveau des noeuds de réseau (Ni) et au niveau des noeuds source et d'extrémité (X, Y),
dans lequel une première ressource du réseau pour la transmission de signaux, commandée depuis le noeud source (X), est utilisée pour la commutation des segments de liaison (Li) à l'intérieur d'une voie, dans lequel la transmission de signaux est interrompue en cas d'apparition d'au moins un point de défaillance (UL) dans cette voie et un message de défaut est transmis d'un noeud de réseau situé en amont du point de défaillance (UL) vers le noeud source (X),
et dans lequel, lors de réception du message de défaut au niveau du noeud source (X), une voie de substitution pour la déviation des signaux et autour du point de défaillance (UL) est choisie entre les noeuds source et d'extrémité (X, Y) au moyen d'un signal de commande émis par le noeud source (X),
**caractérisé**
**en ce que** l'on établit, au moyen du signal de commande émis par le noeud source (X) et en utilisant également la première ressource, une seconde ressource pour la commutation des segments de liaison de la voie de substitution, de manière à ce que seuls les segments de liaison (L1_{UL}, L2_{UL}, ...) situés dans la déviation et nécessitant de nouvelles commutations fassent l'objet de nouvelles commutations au moyen des noeuds de réseau (N1_{UL}, N2_{UL}, ...) associés à la déviation et
**en ce que** la commutation des segments de liaison communs aux deux voies est conservée.

2. Procédé selon la revendication 1,
**caractérisé**
**en ce que** le noeud source (X) initie l'établissement de la voie de substitution par le fait que, dans chaque noeud de réseau individuel de la voie de substitution, il est vérifié si la nouvelle liaison de commutation est identique à la liaison de commutation de la voie initiale, de manière à ce que les ressources dont on n'a plus besoin dans les noeuds de réseau le long de la voie de substitution soient libérées.

3. Procédé selon l'une des revendications 1 à 2,
**caractérisé**
**en ce que** les segments de liaison (L1_{UL}, L2_{UL}, ...) situés dans la déviation sont commutés avec un nombre minimum de nouvelles commutations au moyen des noeuds de réseau (N1_{UL}, N2_{UL}, ...).

4. Procédé selon l'une des revendications précédentes,
**caractérisé**
**en ce que**, en cas de détection de plusieurs points de défaillance dans la voie, le point de défaillance le plus proche du noeud source (X) est contourné en premier grâce à une première voie de substitution, puis les autres points de défaillance sont contournés les uns après les autres en amont grâce à d'autres voies de substitution,
**en ce que** les ressources de la voie initiale sont comparées aux ressources des voies de substitution successives et actualisées les unes après les autres et
**en ce que** des commutations de segments de liaison utilisés à l'identique entre la voie initiale et les voies de substitution respectives sont conservées.

5. Procédé selon l'une des revendications précédentes,
**caractérisé**
**en ce que**, pour chaque noeud de réseau, la commutation se fait entre des canaux de transmission de signaux ayant des granularités différentes.

6. Procédé selon la revendication 5,
**caractérisé**
**en ce qu'**on utilise au moins une technique de multiplexage pour la transmission des signaux.
